# EUROPÄISCHE PATENTSCHRIFT

(11) **EP 3 204 830 B1**
(45) Veröffentlichungstag und Bekanntmachung des Hinweises auf die Patenterteilung: **15.08.2018**
(21) Anmeldenummer: 15796999.9
(22) Anmeldetag: 17.09.2015
(51) Int. Cl.: G05B 19/04, E01B 7/24

(54) **SYSTEM UND VERFAHREN ZUR WETTERDATENGESTÜTZTEN TEMPERIERUNG VON EISENBAHNWEICHEN**
SYSTEM AND DEVICE FOR WEATHER-DATA-ASSISTED TEMPERATURE-CONTROL OF RAILWAY SWITCHES
SYSTÈME ET DISPOSITIF DE THERMORÉGULATION D'AIGUILLAGES FERROVIAIRES ASSISTÉE PAR DES DONNÉES MÉTÉO

(30) Priorität: 19.09.2014 DE 102014113541
(43) Veröffentlichungstag der Anmeldung: 16.08.2017
(73) Patentinhaber: Ean Elektroschaltanlagen GmbH, 04668 Grimma (DE)
(72) Erfinder: LUDWIG, Patrick, 06749 Bitterfeld-Wolfen (DE)
(74) Vertreter: Nourney, David
(86) Internationale Anmeldenummer: PCT/DE2015/000450
(87) Internationale Veröffentlichungsnummer: WO 2016/041537

(56) Entgegenhaltungen:
- DE-A1- 2 215 554
- DE-A1- 4 338 750
- DE-A1- 19 742 085
- Anonymous: "Weichenheizungen mit optischem Niederschlagsfühler und Wettervorhersage", , 17. September 2014 (2014-09-17), Seiten 1-3, XP055239424, Gefunden im Internet: URL:https://www.esa-grimma.de/download/?eI D=fal_frontend_push&docID=304 [gefunden am 2016-01-07]
- Anonymous: "Download - ESA Grimma", , 7. Januar 2016 (2016-01-07), XP055239417, Gefunden im Internet: URL:https://www.esa-grimma.de/download/ [gefunden am 2016-01-07]
- C. WEISS: "Optimizing the energy consumption and operational availability of point heaters using weather forecasts", COMPUTERS IN RAILWAYS XIV, Bd. 1, 24. Juni 2014 (2014-06-24), Seiten 757-766, XP055239446, Southampton, UK ISSN: 1746-4498, DOI: 10.2495/CR140631 ISBN: 978-1-84564-766-7
- "Computers in Railways XIV", , 13. September 2014 (2014-09-13), XP055239444, Gefunden im Internet: URL:https://web.archive.org/web/2014091311 0845/http://www.witpress.com/books/978-1-8 4564-766-7 [gefunden am 2016-01-07]

## Beschreibung

Die vorliegende Erfindung bezieht sich auf ein System und ein Verfahren zur wetterdatengestützten Temperierung von Eisenbahnweichen, insbesondere der Schienen und beweglichen Gestänge von Eisenbahnweichen.

Herkömmliche Weichenheizungsanlagen werden häufig mit Wetterfühlern zur lokalen Erfassung der aktuellen Wetterlage in der Umgebung der entsprechenden Weiche ausgerüstet, um über eine örtliche Steuerung diese Weiche mittels geeigneter Heizelemente zu beheizen.

Diese Systeme weisen bei einer Reihe von Vorteilen jedoch den Nachteil der vergleichsweise langsamen Reaktion auf. Erst beim Eintritt einer Wetteränderung wird die entsprechende Weichenheizungsanlage aktiviert. Dies kann jedoch bei stärkeren und extremen Wetteränderungen wie Temperaturstürzen, Eisregen, Schnee bzw. Schneeregen oder umfangreichem Neuschnee, insbesondere bei Temperaturen um den Gefrierpunkt, nicht ausreichend sein, die entsprechende Weiche schnell genug zu beheizen, um ein Festfrieren der beweglichen Weichenteile oder deren Blockieren mit Schnee oder Eis zu verhindern.

Das Temperieren, insbesondere Beheizen, von Eisenbahnweichen anhand von Wetterdaten ist aus dem Stand der Technik an sich bekannt. So beschreibt DE 197 42 085 B4 ein Weichenheizungssystem mit einer oder mehreren räumlich getrennt angeordneten Weichenheizungsanlagen, die Heizelemente zur Beheizung einer jeweiligen Weiche eines Schienenstrangsystems und Mittel zur Steuerung der Weichenheizelemente beinhalten. Dieses bekannte Weichenheizungssystem weist eine Wettervorhersageeinrichtung auf, die weichenheizungsrelevante Wettervorhersagedaten für die jeweilige Weichenheizungsanlage ermittelt und an diese sendet. Ferner steuern Heizelementsteuerungsmittel der jeweiligen Weichenheizungsanlage die zugehörigen Weichenheizelemente in Abhängigkeit von den empfangenen Wettervorhersagedaten. Der Nachteil dieser Lösung besteht darin, dass das frühzeitige Heizen über zusätzlichen Steuerbefehl "Heizen" an die Weichenheizungsanlage einen sehr hohen Energieaufwand erfordert.

DE 43 38 750 A1 beschreibt eine Schneeschmelzvorrichtung mit elektromagnetischer Induktionsheizung, welche umfasst eine Hochfrequenzstromquelle, ein Paar leitende Kabel, die in wenigstens einer Windung um ein Segment jeder Schiene gewickelt sind durch Durchgangslöcher, welche in den Seitenwänden der Schiene gebildet sind, wobei das Segment der Schiene zwischen zwei Durchgangslöchern definiert ist, sowie ein an die Stromquelle und das leitende Kabel angeschlossenes Zuführkabel, durch das dem leitenden Kabel Energie von der Stromquelle zugeführt wird, wodurch die Schiene durch den von der Stromquelle zugeführten elektromagnetischen induzierten Strom erwärmt wird. Diese elektromagnetische Induktionsheizungs-Schneeschmelzvorrichtung soll die Situation zu vermeiden, dass Weichen durch Eisbildung auf ihnen einfrieren und dadurch unbeweglich zum Verstellen sind.

DE 2 215 554 A betrifft eine Weichenheizung mit an den Schienen angeordneten elektrischen Heizkörpern, mit mindestens einem Temperaturfühler und diesem zugeordneten Regler mit Stellglied zur Regelung des Heizstromes der Heizkörper. Dabei steht/stehen der/die Temperaturfühler im Weichenzungenbereich mit jeweils einer Schiene in Kontakt. Dadurch soll eine Vorrichtung geschaffen werden, die ein sicheres und wirtschaftliches Heizen der Weichen gestattet.

Angesichts der vorstehend genannten Nachteile des Standes der Technik liegt der vorliegenden Erfindung die Aufgabe zugrunde, ein System bereitzustellen und ein Verfahren anzugeben, mit denen Eisenbahnweichen wetterdatengestützt so rechtzeitig und bedarfsgerecht temperiert werden können, dass die Erwärmung mit optimalen Energieeinsatz erfolgt und der Energieverbrauch geplant werden kann sowie wetterbedingte Fehlfunktionen zumindest deutlich minimiert werden.

Diese Aufgabe wird in einem ersten Aspekt der vorliegenden Erfindung durch ein System (1) zur wetterdatengstützten Temperierung von Eisenbahnweichen (3) gelöst, umfassend
- eine mit einem Wetterdatenanbieter (W) verbundene Recheneinheit (101), die dazu ausgelegt ist, in vorgebbaren Zeitintervallen Wetterdaten für zumindest eine Eisenbahnweiche (3) von dem Wetterdatenanbieter (W) abzurufen,
- zumindest eine mit der Recheneinheit (101) verbundene Steuereinheit (103),
- zumindest ein mit der zumindest einen Steuereinheit (103) verbundenes Schaltgerät (105) und
- zumindest eine mit dem Schaltgerät (105) verbundene Weichenheizung (107) für zumindest eine Eisenbahnweiche (3),
wobei die Recheneinheit (101) dazu ausgelegt ist, laufend Wetterdaten für zumindest eine Eisenbahnweiche (3) abzurufen, laufend zu analysieren und laufend einen zeitlichen Ablauf (T1) von optimalen Solltemperaturen für die zumindest eine Eisenbahnweiche (3) vorzugeben, wodurch fortlaufend und witterungsabhängig eine Aktualisierung der Solltemperatur der Eisenbahnweichen (3) erfolgt, und
wobei die Steuereinheit (103) dazu ausgelegt ist, auf der Grundlage des von der Recheneinheit (101) vorgegebenen zeitlichen Ablaufs (T1) mittels des zumindest einen Schaltgeräts (105) die zumindest eine Weichenheizung (107) für die zumindest eine Eisenbahnweiche (3) in regelmäßigen zeitlichen Abständen zu regeln, bis die entsprechende Solltemperatur der Eisenbahnweiche (3) erreicht ist.

Die vorstehend genannte Aufgabe wird in einerm zweiten Aspekt der vorliegenden Erfindung durch ein Verfahren zur wetterdatengestützten Temperierung von Eisenbahnweichen (3) gelöst, umfassend die Schritte:
a) Abrufen von Wetterdaten für zumindest eine Eisenbahnweiche (3) von einem Wetterdatenanbieter (W) mittels einer Recheneinheit (101), die dazu ausgelegt ist, in vorgebbaren Zeitintervallen Wetterdaten für zumindest eine Eisenbahnweiche (3) von dem Wetterdatenanbieter (W) abzurufen,
b) Analysieren der abgerufenen Wetterdaten mittels eines algorithmischen Vorgangs unter Erhalt eines zeitlichen Ablaufs (T1) von optimalen Solltemperaturen für die zumindest eine Eisenbahnweiche (3),
d) Vorgeben des zeitlichen Ablaufs (T1) an eine Steuereinheit (103), die der zumindest einen Eisenbahnweiche (3) zugeordnet ist, und
e) Regeln einer an der zumindest einen Eisenbahnweiche (3) vorgesehenen Weichenheizung (107) auf der Grundlage des zeitlichen Ablaufs (T1) mittels des zumindest einen Schaltgeräts (105)
wobei in Schritt a) das Abrufen von Wetterdaten laufend erneut vorgenommen und das Verfahren erneut durchgeführt wird, wobei in Schritt b) das Analysieren der abgerufenen Wetterdaten laufend in vorgebbaren Zeitintervallen erfolgt und wobei in Schritt d) das Vorgeben des zeitlichen Ablaufs (T1) Wetterdaten laufend in vorgebbaren Zeitintervallen erfolgt, wodurch fortlaufend und witterungsabhängig eine Aktualisierung der Solltemperatur der Eisenbahnweichen (3) erfolgt, und
wobei in Schritt e) das Regeln einer Weichenheizung (107) in regelmäßigen zeitlichen Abständen erfolgt, bis die entsprechende Solltemperatur der Eisenbahnweiche (3) erreicht ist.

Nachfolgend wird die vorliegende Erfindung detailliert beschrieben.

Sofern im Zusammenhang mit dem erfindungsgemäßen System (1) Verfahrensmerkmale beschrieben werden, so beziehen sich diese insbesondere auf das erfindungsgemäße Verfahren, wie es nachstehend definiert wird. Wenn in der Beschreibung des erfindungsgemäßen Verfahrens gegenständliche Merkmale ausgeführt werden, so beziehen sich diese insbesondere auf das erfindungsgemäße System (1), wie sie nachstehend beschrieben wird.

Die Erfindung bezieht sich zunächst auf ein System (1) zur wetterdatengstützten Temperierung von Eisenbahnweichen (3), insbesondere der Schienen und beweglichen Gestänge von Eisenbahnweichen (3). Es umfasst eine mit einem Wetterdatenanbieter (W) verbundene Recheneinheit (101), zumindest eine mit der Recheneinheit (101) verbundene Steuereinheit (103), zumindest ein mit der zumindest einen Steuereinheit (103) verbundenes Schaltgerät (105) und zumindest eine mit dem Schaltgerät (105) verbundene Weichenheizung (107) für zumindest eine Eisenbahnweiche (3).

Dabei ist die Recheneinheit (101) dazu ausgelegt, Wetterdaten für zumindest eine Eisenbahnweiche (3) von dem Wetterdatenanbieter (W) abzurufen, zu analysieren und einen zeitlichen Ablauf (T1) von optimalen Solltemperaturen für die zumindest eine Eisenbahnweiche (3) vorzugeben. Die Recheneinheit (101) ist dazu ausgelegt, laufend, d.h. in regelmäßigen zeitlichen Abständen, diese Wetterdaten abzurufen. Die Steuereinheit (103) ist ferner dazu ausgelegt, auf der Grundlage des von der Recheneinheit (101) vorgegebenen zeitlichen Ablaufs (T1) mittels des zumindest einen Schaltgeräts (105) die zumindest eine Weichenheizung (107) für die zumindest eine Eisenbahnweiche (3) zu regeln. Diese Regelung erfolgt in regelmäßigen zeitlichen Abständen.

Unter "Wetterdatenanbieter" (W) wird in der vorliegenden Erfindung ein externer Dienstleister verstanden, der die Datenquelle der Wetterinformationen darstellt. Solche Dienstleister wie Meteomedia oder DWD können bedarfsgerecht Wetterinformationen zur Abholung über das Internet zur Abholung über einen Webservice bereit stellen.

Die Recheneinheit (101) stellt das logische Herzstück des Systems (1) dar. Sie ist insbesondere CPU gestützt.

Die Steuereinheit (103) ist die untergeordnete Steuerung. Sie regelt mit dem an sie übertragenen zeitlichen Ablauf (T1) über das jeweilige Schaltgerät (105) entsprechend die Weichenheizung (107), d.h. einzelne Heizelemente, bis die entsprechende Solltemperatur der Eisenbahnweiche (3), d.h. der entsprechenden Schiene/n und Gestänge erreicht ist. Des Weiteren übernimmt die Steuereinheit (103) bei Ausfall der Datenfernübertragung (DFÜ) zur Rechnereinheit (101) die Reglung der jeweiligen Schaltgeräte (105), bis die entsprechende Solltemperatur der Eisenbahnweiche (3), d.h. der entsprechenden Schiene/n erreicht ist.

Als Schaltgerät (105) wird in der vorliegenden Erfindung ein Halbleiterschaltgerät mit oder ohne Regel- und Überwachungseinrichtung bezeichnet. Dieses erhält von der Steuereinheit (103) auf der Grundlage des zeitlichen Ablaufs (T1) die jeweils vorgesehene Solltemperatur für die Eisenbahnweiche (3). Das Schaltgerät (105) regelt dann selbständig die Heizelemente. Alternativ erfolgt die Regelung durch die Steuereinheit (103).

Eine Weichenheizung (107) gemäß der vorliegenden Erfindung umfasst im Wesentlichen ein odere mehrere Heizelemente, die in geeigneter Weise an der Eisenbahnweiche (3), d.h. an den festen und beweglichen Schienen und Gestängen für die beweglichen Schienen, angeordnet sind sowie eine Steuerung für die Heizelemente.

Unter einer Eisenbahnweiche (3) werden erfindungsgemäß alle Arten von Weichen wie einfache Weichen, Kreuzungsweichen, Dreiwegeweichen etc. verstanden. Neben Eisenbahnweichen (3) ist die vorliegende Erfindung auch auf andere Fahrwegelemente wie Gleissperren, Signalanlagen, spezielle Gleisabschnitte oder Bahnübergangsanlagen anwendbar, bei denen die Temperaierung der Schienen und deren Gestänge beispielsweise über Konvektion und Wärmestrahlung von Heizstäben erfolgt.

Das erfindungsgemäße System (1) hat gegenüber dem Stand der Technik, in dem eine Weichenheizung sofort auf das Eintreffen eines Heizbefehls ("Schaltsignal") durch Beginnen des Heizens reagiert, den Vorteil, dass es nicht in Abhängigkeit vom eintreffenden Signal einer Wetterdatenauswertung arbeitet, sondern die Eisenbahnweiche (3) vorausschauend bedarfsgerecht temperiert und den daraus resultierenden Energiebedarf vorausschauend ermittelt.

Hierzu werden erfindungsgemäß die Wetterdaten laufend abgerufen, diese Wetterdaten laufend analysiert und laufend ein zeitlicher Ablauf (Temperatur-Fahrplan) ermittelt, wodurch fortlaufend und witterungsabhängig eine Aktualisierung der Solltemperatur der Eisenbahnweichen (3), bzw. deren Schienen erfolgt. Ein erfindungsgemäßer Vorteil besteht somit in der Anpassung der Solltemperatur an die tatsächliche und zukünftig zu erwartende Witterung und damit in einer Energieeinsparung durch mögliche niedrigere Sollwerte bei milden Wetter sowie der Energieplanung für zukünftig zu erwartendes Wetter.

In einer Weiterbildung der Erfindung umfasst das System (1) ferner zumindest eine mit der Recheneinheit (101) verbundene Wettererfassungseinrichtung (109) für die zumindest eine Eisenbahnweiche (3). Dabei ist die Recheneinheit (101) ferner dazu ausgelegt, den zeitlichen Ablauf (T1) mit tatsächlichen Wetterdaten an der zumindest einen Eisenbahnweiche (3), die durch die Wettererfassungseinrichtung (109) erfasst und übermittelt wurden, zu vergleichen und einen aktualisierten zeitlichen Ablauf (T2) von optimalen Solltemperaturen für die zumindest eine Eisenbahnweiche (3) vorzugeben. Außerdem ist die Steuereinheit (103) dazu ausgelegt, auf der Grundlage des von der Recheneinheit (101) vorgegebenen aktualisierten zeitlichen Ablaufs (T2) mittels des zumindest einen Schaltgeräts (105) die zumindest eine Weichenheizung (107) für die zumindest eine Eisenbahnweiche (3) zu regeln.

Als Wettererfassungseinrichtung (109) kommen gemäß der Erfindung Fühlerstationen mit der Erfassung von Lufttemperatur, Luftfeuchte, Niederschlagsmenge und Niederschlagsart in Frage. Diese sendet die erfassten lokalen Wetterdaten über die Steuereinheit (103) an die Recheneinheit (101). Ggf. können die erfassten lokalen Wetterdaten an den Wetterdatenanbieter (W) weitergegeben werden.

In dieser Weiterbildung regelt die Steuereinheit (103) mit dem an sie übertragenen zeitlichen Ablauf (T2) über das jeweilige Schaltgeräte (105) entsprechend die Weichenheizung (107), bis die entsprechende Solltemperatur der Eisenbahnweiche (3) erreicht ist. Das Schaltgerät (105) erhält von der Steuereinheit (103) auf der Grundlage des zeitlichen Ablaufs (T2) die jeweils vorgesehene Solltemperatur für die Eisenbahnweiche (3).

Diese Weiterbildung hat den Vorteil, dass die Regelung der Weichenheizung (107) für die zumindest eine Eisenbahnweiche (3) nicht alleine aufgrund der Wetterdaten, also aufgrund von Vorhersagen, geregelt wird, sondern dass tatsächliche Wetterdaten vom Ort der jeweiligen Eisenbahnweiche (3) in die Regelung einfließen.

Der zeitliche Ablauf (T1) oder der zeitliche Ablauf (T2) können auch als Temperatur-Fahrpläne bezeichnet werden.

In einer Ausführungsform bildet die Recheneinheit (101) eine Gruppenleitebene (G) und zumindest eine Steuereinheit (103), zumindest ein Schaltgerät (105) und zumindest eine Weichenheizung (107) für zumindest eine Eisenbahnweiche (3) zumindest bilden eine Feldebene (F). Die Gruppenleitebene (G) bietet einen idealen Standort für die Recheneinheit (101), während die Feldebene (F) die Einrichtungen aufnimmt, die mehr oder weniger unmittelbar an der Eisenbahnweiche (3) angeordnet sind.

Auf diese Weise können das Abrufen der Wetterdaten, deren Analysieren und das Vorgeben des zeitlichen Ablaufs (T1) oder des zeitlichen Ablaufs (T2) einerseits von der Regelung der Weichenheizung (107) sauber getrennt werden und andereseits mehrere Anlagen in Feldebenen (F) von einer Gruppenleitebene (G) gesteuert werden.

Es hat sich ferner als vorteilhaft herausgestellt, wenn die Gruppenleitebene (G) und die Feldebene (F) örtlich voneinander entfernt angeordnet sind, so dass bei einer Weiterentwicklung der Recheneinheit (101) diese in der Gruppenleitebene (G) problemlos ausgetauscht oder überarbeitet werden kann, ohne auf die Feldebene (F) zugreifen zu müssen, die ggf. weiter entfernt liegt.

In einer dazu alternativen Ausführungsform sind die Gruppenleitebene (G) und die Feldebene (F) örtlich nicht voneinander entfernt angeordnet, sondern befinden sich in relativer Nähe. Ggf. können die Gruppenleitebene (G) und die Feldebene (F) auch örtlich zusammenfallen.

Durch die vorstehend dargestellten Ausführungsformen ist es möglich, mit der Gruppenleitebene (G) eine, zwei oder mehr Feldebenen (F) zu verbinden. Somit kann mit nur einer Recheneinheit (101) eine Mehrzahl von Weichenheizungen (107) über die entsprechenden Schaltgeräte (105) geregelt werden.

Die zumindest eine Feldebene (F) kann mittels einer Datenfernübertragung (DFÜ) mit der Gruppenleitebene (G) verbunden sein. Auf diese Weise wird der zeitliche Ablauf (T1) oder der zeitliche Ablauf (T2) sowie die Wetterdaten der Wettererfassungseinrichtung (109) auf die Steuereinheit (103) übertragen, wo dieser anschließend zeitgesteuert verarbeitet wird.

Ebenso kann die Recheneinheit (101) mittels einer Datenfernübertragung (DFÜ) mit dem Wetterdatenanbieter (W) verbunden sein. Vorzugsweise befindet sich die Datenquelle des Wetterdatenanbieters (W) im Internet, so dass für die Recheneinheit (101) in der Gruppenleitebene (G) ein Zugang zum Internet geschaffen wird, zum Beispiel durch ein UMTS/GSM Modem oder einen DSL-Anschluss.

Die vorstehenden Ausführungen und Bevorzugungen im Hinblick auf das erfindungsgemäße System (1) gelten für das nachstehend beschriebene erfindungsgemäße Verfahren entsprechend. Ebenso gelten die nachstehenden Ausführungen und Bevorzugungen im Hinblick auf das erfindungsgemäße Verfahren für das erfindungsgemäße System (1) entsprechend.

Die Erfindung bezieht sich in einem zweiten Aspekt auf ein Verfahren zur wetterdatengestützten Temperierung von Eisenbahnweichen (3). Das Verfahren umfasst einen Schritt a) Abrufen von Wetterdaten für zumindest eine Eisenbahnweiche (3) von einem Wetterdatenanbieter (W) mittels einer Recheneinheit (101). In einem Schritt b) werden die abgerufenen Wetterdaten mittels eines algorithmischen Vorgangs unter Erhalt eines zeitlichen Ablaufs (T1) von optimalen Solltemperaturen für die zumindest eine Eisenbahnweiche (3) analysiert. Ein Schritt d) bildet das Vorgeben des zeitlichen Ablaufs (T1) an eine Steuereinheit (103), die der zumindest einen Eisenbahnweiche (3) zugeordnet ist. In einem Schritt e) wird schließlich eine an der zumindest einen Eisenbahnweiche (3) vorgesehene Weichenheizung (107) auf der Grundlage des zeitlichen Ablaufs (T1) mittels des zumindest einen Schaltgeräts (105) geregelt.

Das Abrufen von Wetterdaten für zumindest eine Eisenbahnweiche (3) von einem Wetterdatenanbieter (W) in Schritt a) erfolgt laufend, d.h. in regelmäßigen zeitlichen Abständen. Dadurch werden die Nachfolgenden Schritte b), d) und e) sowie ggf. c) ebenfalls laufend, d.h. in regelmäßigen zeitlichen Abständen, vorgenommen.

Das erfindungsgemäße Verfahren weist im Wesentlichen die gleichen Vorteile wie das erfindungsgemäße System auf. Ferner geht das erfindungsgemäße Verfahren nicht mit starren Szenarien vor, wie dies im Stand der Technik der Fall ist, bspw. wenn in DE 197 42 085 B4 der Befehl "Heize jetzt für Szanario A" gegeben wird. Vielmehr arbeitet das erfindungsgemäße Verfahren gleitend je nach Wetterkonstellation und ermittelt unter Berücksichtigung der Wahrscheinlichkeit derselben eine Zeitreihe von Temperaturdaten, welche die Eisenbahnweiche (3) für eine sichere Funktion bei optimalen Energieeinsatz haben soll, d.h. es wird ein Temperatur-Fahrplan erstellt. Diese Daten werden dann einmalig nach Kalkulation an die Steuereinheit übertragen. Es werden keine Wetterinformationen an die Weichenheizung (107) übertragen wie im Stand der Technik.

In einer Weiterbildung des erfindungsgemäßen Verfahrens umfasst dieses ferner einen Schritt c) zwischen Schritt b) und Schritt d), in dem der zeitliche Ablauf (T1) mit tatsächlichen Wetterdaten an der zumindest einen Eisenbahnweiche (3) verglichen wird, die durch eine Wettererfassungseinrichtung (109) übermittelt werden, unter Erhalt eines aktualisierten zeitlichen Ablaufs (T2) von optimalen Solltemperaturen für die zumindest eine Eisenbahnweiche (3). Dabei wird in Schritt d) der aktualisierte zeitliche Ablauf (T2) an die Steuereinheit (103) vorgegeben, in Schritt e) die an der zumindest einen Eisenbahnweiche (3) vorgesehenen Weichenheizung (107) auf der Grundlage des aktualisierten zeitlichen Ablaufs (T2) mittels des zumindest einen Schaltgeräts (105) geregelt.

Diese Weiterbildung hat den Vorteil, dass die Regelung der Weichenheizung (107) für die zumindest eine Eisenbahnweiche (3) nicht alleine aufgrund der Wetterdaten, also aufgrund von Vorhersagen, geregelt wird, sondern dass tatsächliche Wetterdaten vom Ort der jeweiligen Eisenbahnweiche (3) in die Regelung einfließen.

Es hat sich für eine optimale Regelung der Weichenheizung (107) als vorteilhaft erwiesen, wenn in Schritt a) das Abrufen von Wetterdaten in vorgebbaren Zeitintervallen erneut vorgenommen und das Verfahren erneut durchgeführt wird. Auf diese Weise kann das Regeln der Weichenheizung (107) an sich ändernde Wetterbedinungen aktuell angepasst werden.

Die vorgebbaren Zeitintervalle können an die äußeren Umstände der Eisenbahnweiche (3) angepasst werden und zwischen 5 Minuten und 5 Stunden, bevorzugt 15 Minuten und 2 Stunden, insbesondere zwischen 30 Minuten und 1 Stunde liegen. Dabei können die vorgebbaren Zeitintervalle an die aktuelle Wettersituation angepasst werden, so dass beispielsweise bei ruhigem, über längere Zeiträume gleichbleibendem Wetter die Zeitintervalle verlängert werden, bei Wetterlagen mit häufigen Wechseln die Zeitintervalle jedoch verkürzt werden.

Es ist bevorzugt, wenn die Wetterdaten die Parameter Lufttemperatur, Niederschlagsmenge, Niederschlagswahrscheinlichkeit, Taupunkt und/oder Sonnenscheindauer umfassen.

In einer weiteren Ausführungsform des erfindungsgemäßen Verfahrens werden aus den Wetterdaten und dem zeitlichen Ablauf (T2) der Energiebedarf für einen oder mehrere zukünftige Zeiträume ermittelt und diese an die Weichenheizung (107) übertragen. Hierdurch wird eine Vorhersage und Planung des erforderlichen Energieverbrauchs für einen bestimmten Zeitraum ermöglicht, indem in der Recheneinheit (101) für die zu erwartenden Umgebungsbedingungen und den ermittelten zeitlichen Verlauf der Schiensolltemperatur der Energiebedarf für einen bestimmten Zeitraum ermittelt wird.

Weitere Ziele, Merkmale, Vorteile und Anwendungsmöglichkeiten ergeben sich aus der nachfolgenden Beschreibung von die Erfindung nicht einschränkenden Ausführungsbeispielen anhand der Figur. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbeziehung. Es zeigt:

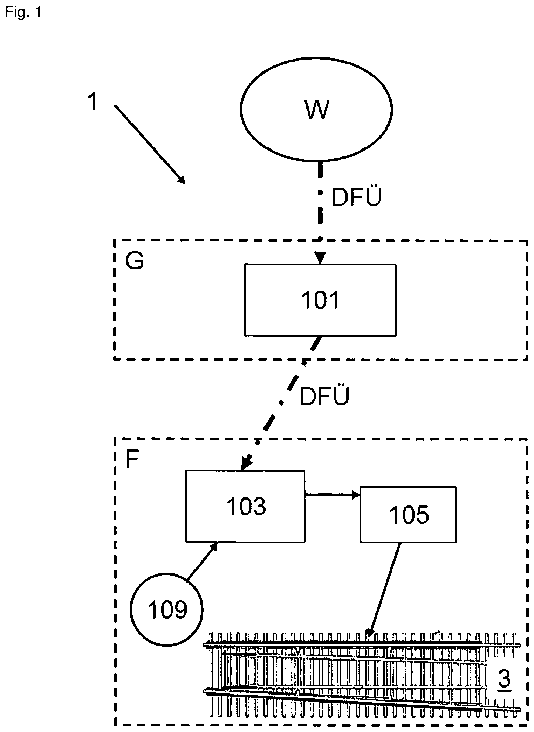

- Fig. 1: ein Schema des erfindungsgemäßen Systems 1 nach einer Ausführungsform der Erfindung.

Anhand des Schemas in Fig. 1 wird eine bevorzugte Ausführungsform der Erfindung beschrieben. Das erfindungsgemäße System 1 kann dabei grundlegend in drei Ebenen unterteilt werden, den Wetterdatenanbieter W, die Gruppenleitebene G und die Feldebene F.

Der Wetterdatenanbieter W stellt die Datenquelle der Wetterinformationen dar. Ein externer Dienstleister wie Meteomedia oder DWD stellen bedarfsgerecht Wetterinformationen zur Abholung über das Internet zur Abholung über einen Webservice bereit.

Die Datenfernübertragung DFÜ über das Internet stellt die Kommunikation zwischen dem Wetterdatenanbieter W und der zur Auswertung bereitstehenden Recheneinheit 101 (z.B. ein Industrie-PC) bereit. Da sich die Datenquelle in dieser Ausführungsform im Internet befindet, muss hier ein Zugang zum Internet geschaffen werden. Dies kann zum Beispiel durch ein UMTS/GSM-Modem oder einen DSL-Anschluss umgesetzt werden.

Die Gruppenleitebene G ist in der vorliegenden Ausführungsform räumlich von der Feldebene F getrennt und bietet den idealen Standort für die Recheneinheit 101 zur Wetterdatenauswertung.

Die Recheneinheit 101 kann als das logische Herzstück der wetterdatengenstützen Weichenheizung bezeichnet werden. Sie holt aktiv die Wetterinformationen vom Wetterdatenanbieter W ab und analysiert diese unter Berücksichtigung der Wahrscheinlichkeit durch ein algorithmisches Verfahren. Das Ergebnis dieser algorithmischen Analyse ist ein zeitlicher Ablauf T1 (d.h. ein Temperatur-Fahrplan) von zeitlich gestaffelten optimalen Schienensolltemperaturen pro Weichenheizung 107, welche an diese Recheneinheit 101 angeschlossen sind.

Bei geringer Wahrscheinklichkeit liegt die berechnete Schienensolltemperatur bei zum Beispiel - 10 °C, so dass jetzt kein Heizen erforderlich ist. Sollte sich in diesem Fall die Niederschlagswahrscheinlichkeit auf 90 % erhöhen, dann wird eine Schienensolltemperatur von + 5 °C berechnet und vorgegeben. Die Schienensolltemperaturen dazwischen korrelieren entsprechend der Wahrscheinlichkeit.

Die Datenfernübertragung DFÜ zwischen Gruppenleitebene G und Feldebene F überträgt den bereitgestellten zeitlichen Ablauf T1 zur Steuereinheit 103 der Weichenheizung 107, wo dieser anschließend zeitgesteuert verarbeitet wird.

Die Feldebene beinhaltet die Steuereinheit 103 sowie das Schaltgerät 105 für die Weichenheizung 107.

Die Steuereinheit 103 vergleicht den an sie übertragenen zeitlichen Ablauf T1 mit den tatsächlichen Wetterdaten und regelt über das Schaltgerät 105 entsprechend die Heizelemente der Weichenheizung 107, bis die entsprechende Solltemperatur der Schiene/n der Eisenbahnweiche 3 erreicht ist.

Das Schaltgerät 105 bekommt von der Steuereinheit 103 die entsprechend vorgesehene Solltemperatur der Eisenbahnweiche 3 übertragen. Das System 1 regelt dann selbstständig die Heizelemente, bis die entsprechende Schienentemperatur erreicht ist.

In einer praktischen Ausführungsform stellt ein Wetterdatenanbieter W in regelmäßigen Abständen, wie zum Beispiel jede Stunde, neu kalkulierte Wetterdaten für die Geokoordinate einer bestimmten Eisenbahnweiche 3 bereit und macht diese über einen Webservice zugänglich. Dabei kann es sich inbesondere um die Parameter Lufttemperatur, Niederschlagsmenge, Niederschlagswarscheinlichkeit, Taupunkt sowie Sonnenscheindauer handeln.

Das erfindungsgemäße System 1 wird durch einen in der Recheneinheit 101 einstellbaren Zeitintervall für die Datenabfrage der Wetterdaten bei dem Wetterdatenanbieter W gesteuert. In diesen regelmäßigen Abständen wird der Wetterdatenanbieter W angefragt und die neu vorliegenden Wetterdaten werden über eine Datenfernübertragung DFÜ, insbesondere über eine Internetverbindung, an das System 1 übertragen. In der Anfrage enthalten ist die Geokoordinate der Eisenbahnweiche 3 mit einer Weichenheizung 107, die in dem System 1 hinterlegt ist. Über die Geokoordinate wird die Position des Systems 1 dem Wetterdatendienstleister mitgeteilt und die standortbezogenen Wetterdaten werden bereitgestellt.

Diese Daten werden nach erfolgter Datenübertragung an die Recheneinheit 101 in dieser durch einen vorgegebenen Algorithmus ausgewertet. Die Daten selbst werden in einem Zeitreihenmodell von der Datenquelle (Wetterdatenanbieter W) an das System 1 in die Gruppenleitebene G übertragen. Die Rohdaten können wie folgt aussehen und zum Transport in einem geeigneten Datenformat wie XML verpackt sein.

In Tabelle 1 werden die Daten "Temperatur" sowie "Niederschlagswahrscheinlichkeit" sowie "Niederschlagsart" sowie "Niederschlagsmenge" nur exemplarisch für eine Vielzahl von Daten genannt. Welche Daten für die Auswertung herangezogen werden, wird durch den Algorithmus der Auswertung bestimmt.

**Tabelle 1 "Wetterdaten aus der Datenquelle"**

| Zeitstempel | Temperatur | Niederschlagswahrscheinlichkeit | Niederschlagsart | Niederschlagsmenge |
|---|---|---|---|---|
| 11.02.2014 12:30 | 1 °C | 0 % | kein | 0 |
| 11.02.2014 13:00 | -2 °C | 50 % | Regen | 0 |
| 11.02.2014 13:30 | -2 °C | 90 % | Regen | 3 mm / h |
| 11.02.2014 14:00 | -2 °C | 90 % | Regen | 7 mm / h |
| 11.02.2014 14:30 | -5 °C | 90 % | Schnee | 1 cm / h |
| 11.02.2014 15:00 | -5 °C | 90 % | Schnee | 6 cm / h |

Das System 1 generiert aus den Wetterdaten durch die Hinzunahme des bereitgestellten Algorithmus sowie der aktuellen Werte einer Wettererfassungseinrichtung 109 einen zeitlichen Ablauf T1, d.h. einen Temperatur-Fahrplan der Solltemperatur der Eisenbahnweiche 3. Hier werden die Wetterdaten des Wetterdatenanbieters W durch die lokalen Wetterdaten ergänzt und zu einem zeitlichen Ablauf T2 korrigiert. Dieser zeitliche Ablauf T2 kann wie in Tabelle 2 dargestellt aussehen:

**Tabelle 2 "Temperatur-Fahrplan"**

| Zeitstempel | Schienensolltemperatur |
|---|---|
| 11.02.2014 12:30 | - 99 °C |
| 11.02.2014 13:00 | - 99 °C |
| 11.02.2014 13:30 | 0 °C |
| 11.02.2014 13:30 | 1 °C |
| 11.02.2014 14:00 | 3 °C |
| 11.02.2014 14:00 | 6 °C |

Dieser Temperatur-Fahrplan der Schienentemperatur wird anschließend über die DFÜ-Verbindung an die Steuereinheit 103 übertragen. Die Steuereinheit 103 nimmt den Temperatur-Fahrplan entgegen und ersetzt einen eventuell schon vorliegenden veralteten Temperatur-Fahrplan mit den neuen Temperaturdaten. Da die Steuereinheit 103 eine eigene Uhr hat, ist diese nun in der Lage, den Temperatur-Fahrplan entsprechend abzuarbeiten. Für die in der exemplarischen Tabelle Temperatur-Fahrplan dargestellten Daten bedeutet dies, dass ab dem 11.02.2014 (als ein beliebiges Datumsbeispiel) um 12:30 Uhr eine Solltemperatur der Weiche von - 99 °C ausreichend ist und die Weiche ab dem Zeitpunkt auf dieser Temperatur zu halten ist. Die - 99 °C steht hier für den Status, dass kein Heizen notwendig ist. Ab dem 11.02.2014 um 13:00 Uhr ist dann eine andere Temperatur gültig. Das Schaltgerät 105 wird dann angewiesen, die Schienentemperatur von 0 °C entsprechend zu halten.

Die Regelung der Weichenheizung 107 nach den Wetterdaten des Wetterdatenanbieters W stellt ein Risiko dar, wenn die Wetterdaten zum einen durch eine falsche Standortkonfiguration oder zum anderem durch fehlerhafte oder fehlende Wetterdaten falsch sind und die Steuereinheit 103 keine Vorgabe zum Regeln hat. In dem Fall ist die Schienen-Solltemperatur falsch und die Weiche kann einfrieren oder verheizt zu viel Energie. Daher ist es immer vorteilhaft, die lokale wettergestützte Regelung beizubehalten, die dann greift, wenn die vorhersagegestützten Temperaturvorgaben zu unvorteilhaft für die Weiche sind.

Das erfindungsgemäße System 1 ist generell gegen den Ausfall der auf einer Wettervorhersage gestützten Regelung abgesichert. Sollte die Prozesskette ausfallen, so übernimmt wie gewohnt die lokale Regelung der Steuereinheit 103. Ebenso wird von dieser einen Störmeldung an die Recheneinheit 101 gesendet, die darauf hinweist das die auf einer Wettervorhersage gestützte Regelung ausgefallen ist. Es kann durchaus durch Engpässe oder Störungen bei dem Wetterdatenanbieter W oder Probleme im Internet vorkommen, dass die Wetterdaten verspätet übertragen werden. Das System 1 bietet dafür eine Überlappung der Wetterdaten für die nächsten Stunden, d.h. einem Prognosehorizont. Für diesen Zeitraum, der sich durchaus auch auf mehrere Tage ausweiten lässt, wird ebenso der Temperatur-Fahrplan der Eisenbahnweiche 3 bereitgestellt, welchen die Steuereinheit 103 abarbeitet.

Dadurch, dass das erfindungsgemäße System 1 von einem Wetterdatenanbieter W Wetterdaten für die aktuelle Position der Weiche erhält und diese auswerten kann, setzt das System 1, sobald eine Bedingung eintritt, die ein proaktives Heizen der Eisenbahnweiche 3 notwendig macht, die Information in Richtung Steuerung der Weichenheizung 107 ab. Im Ergebnis wird die Eisenbahnweiche 3 bedarfsgerecht vorgeheizt und wird bei Einsetzen einer extremen Wettersituation bspw. nicht unterkühlen und somit einfrieren.

Perspektivisch können weitere proaktive Verhaltensweisen dieser Steuerung hinzugefügt und diese regelmäßig verbessert werden.

### Bezugszeichen

- 1: System
- 2: Eisenbahnweiche
- 101: Recheneinheit
- 103: Steuereinheit
- 105: Schaltgerät
- 107: Weichenheizung
- 109: Wettererfassungseinrichtung
- W: Wetterdatenanbieter
- G: Gruppenleitebene
- F: Feldebene
- DFÜ: Datenfernübertragung

## Patentansprüche

1. System (1) zur wetterdatengestützten Temperierung von Eisenbahnweichen (3), umfassend
- eine mit einem Wetterdatenanbieter (W) verbundene Recheneinheit (101), die dazu ausgelegt ist, in vorgebbaren Zeitintervallen Wetterdaten für zumindest eine Eisenbahnweiche (3) von dem Wetterdatenanbieter (W) abzurufen,
- zumindest eine mit der Recheneinheit (101) verbundene Steuereinheit (103),
- zumindest ein mit der zumindest einen Steuereinheit (103) verbundenes Schaltgerät (105) und
- zumindest eine mit dem Schaltgerät (105) verbundene Weichenheizung (107) für zumindest eine Eisenbahnweiche (3),
**dadurch gekennzeichnet,**
**dass** die Recheneinheit (101) dazu ausgelegt ist, laufend die Wetterdaten für zumindest eine Eisenbahnweiche (3) abzurufen, laufend zu analysieren und laufend einen zeitlichen Ablauf (T1) von optimalen Solltemperaturen für die zumindest eine Eisenbahnweiche (3) vorzugeben, wodurch fortlaufend und witterungsabhängig eine Aktualisierung der Solltemperatur der Eisenbahnweichen (3) erfolgt, und
**dass** die Steuereinheit (103) dazu ausgelegt ist, auf der Grundlage des von der Recheneinheit (101) vorgegebenen zeitlichen Ablaufs (T1) mittels des zumindest einen Schaltgeräts (105) die zumindest eine Weichenheizung (107) für die zumindest eine Eisenbahnweiche (3) in regelmäßigen zeitlichen Abständen zu regeln, bis die entsprechende Solltemperatur der Eisenbahnweiche (3) erreicht ist.

2. System (1) nach Anspruch 1, ferner umfassend
- zumindest eine mit der Recheneinheit (101) verbundene Wettererfassungseinrichtung (109) für die zumindest eine Eisenbahnweiche (3)
wobei die Recheneinheit (101) ferner dazu ausgelegt ist, den zeitlichen Ablauf (T1) mit tatsächlichen Wetterdaten an der zumindest einen Eisenbahnweiche (3), die durch die Wettererfassungseinrichtung (109) übermittelt wurden, zu vergleichen und einen aktualisierten zeitlichen Ablauf (T2) von optimalen Solltemperaturen für die zumindest eine Eisenbahnweiche (3) vorzugeben und
wobei die Steuereinheit (103) dazu ausgelegt ist, auf der Grundlage des von der Recheneinheit (101) vorgegebenen aktualisierten zeitlichen Ablaufs (T2) mittels des zumindest einen Schaltgeräts (105) die zumindest eine Weichenheizung (107) für die zumindest eine Eisenbahnweiche (3) zu regeln.

3. System (1) nach Anspruch 1 oder 2, wobei die Recheneinheit (101) eine Gruppenleitebene (G) bildet und die zumindest eine Steuereinheit (103), das zumindest eine Schaltgerät (105) und die zumindest eine Weichenheizung (107) für zumindest eine Eisenbahnweiche (3) zumindest eine Feldebene (F) bilden.

4. System (1) nach Anspruch 3, wobei die Gruppenleitebene (G) und die Feldebene (F) örtlich voneinander entfernt oder nebeneinander oder in einer Einheit integriert angeordnet sind.

5. System (1) nach Anspruch 3 oder 4, wobei mit der Gruppenleitebene (G) eine, zwei oder mehr Feldebenen (F) verbunden sind.

6. System (1) nach einem der Ansprüche 3 bis 5, wobei die zumindest einen Feldebene (F) mittels eine Datenfernübertragung (DFÜ) mit der Gruppenleitebene (G) verbunden ist.

7. Verfahren zur wetterdatengestützten Temperierung von Eisenbahnweichen (3), umfassend die Schritte:
a) Abrufen von Wetterdaten für zumindest eine Eisenbahnweiche (3) von einem Wetterdatenanbieter (W) mittels einer Recheneinheit (101), die dazu ausgelegt ist, in vorgebbaren Zeitintervallen Wetterdaten für zumindest eine Eisenbahnweiche (3) von dem Wetterdatenanbieter (W) abzurufen,
b) Analysieren der abgerufenen Wetterdaten mittels eines algorithmischen Vorgangs unter Erhalt eines zeitlichen Ablaufs (T1) von optimalen Solltemperaturen für die zumindest eine Eisenbahnweiche (3),
d) Vorgeben des zeitlichen Ablaufs (T1) an eine Steuereinheit (103), die der zumindest einen Eisenbahnweiche (3) zugeordnet ist, und
e) Regeln einer an der zumindest einen Eisenbahnweiche (3) vorgesehenen Weichenheizung (107) auf der Grundlage des zeitlichen Ablaufs (T1) mittels des zumindest einen Schaltgeräts (105),
**dadurch gekennzeichnet,**
**dass** in Schritt a) das Abrufen von Wetterdaten laufend erneut vorgenommen und das Verfahren erneut durchgeführt wird, wobei in Schritt b) das Analysieren der abgerufenen Wetterdaten laufend in vorgebbaren Zeitintervallen erfolgt und wobei in Schritt d) das Vorgeben des zeitlichen Ablaufs (T1) Wetterdaten laufend in vorgebbaren Zeitintervallen erfolgt, wodurch fortlaufend und witterungsabhängig eine Aktualisierung der Solltemperatur der Eisenbahnweichen (3) erfolgt, und dass in Schritt e) das Regeln einer Weichenheizung (107) in regelmäßigen zeitlichen Abständen erfolgt, bis die entsprechende Solltemperatur der Eisenbahnweiche (3) erreicht ist.

8. Verfahren nach Anspruch 7, ferner umfassend den Schritt
c) Vergleichen des zeitlichen Ablaufs (T1) mit tatsächlichen Wetterdaten an der zumindest einen Eisenbahnweiche (3), die durch eine Wettererfassungseinrichtung (109) übermittelt werden, unter Erhalt eines aktualisierten zeitlichen Ablaufs (T2) von optimalen Solltemperaturen für die zumindest eine Eisenbahnweiche (3),
wobei in Schritt d) der aktualisierte zeitliche Ablauf (T2) an die Steuereinheit (103) vorgegeben wird, und
wobei in Schritt e) die an der zumindest einen Eisenbahnweiche (3) vorgesehenen Weichenheizung (107) auf der Grundlage des aktualisierten zeitlichen Ablaufs (T2) mittels des zumindest einen Schaltgeräts (105) geregelt wird.

9. Verfahren nach einem der Ansprüche 7 oder 8, wobei die Wetterdaten die Parameter Lufttemperatur, Niederschlagsmenge, Niederschlagswahrscheinlichkeit, Taupunkt und/oder Sonnenscheindauer umfassen.

10. Verfahren nach einem der Ansprüche 7 bis 9, wobei aus den Wetterdaten und dem zeitlichen Ablauf (T2) der Energiebedarf für einen oder mehrere zukünftige Zeiträume ermittelt wird und diese an die Weichenheizung (107) übertragen werden.

## Claims

1. System (1) for weather data based temperature control of railway points (3) comprising
- a processing unit (101) connected to the weather data provider (W) which is designed to call weather data from the weather data provider for at least one railway point (3) in definable time intervals,
- at least one control unit (103) connected to the processing unit (101),
- at least one switching device (105) connected to the at least one control unit (103)
- at least one point heating (107) for at least one railway point (3) connected to the switching device (105),
**characterised by** the fact
that the processing unit (101) is designed for constant calling of the weather data for at least one railway point (3), for analysing it continously and for defining a temporal course (T1) of optimal set temperatures for the at least one railway point (3) resulting in a constant and weather dependent update of the set temperature of the railway point (3), and
that the control unit (103) is designed for controlling the at least one point heating (107) for the at least one railyway point (3) in regular temporal distances by means of the at least one switching device (105) on the basis of the temporal course defined by the processing unit (101) until the set temperature of the railway point is reached.

2. System (1) according to claim 1, further comprising
- at least one weather data recording device (109) for the at least one railyway point (3) connected to the processing unit (101)
wherein the processing unit (101) is further designed for comparing the temporal course (T1) to actual weather data on the at least one railway point (3) which has been transmitted by the weather data recording device (109) and for defining an updated temporal course (T2) of optimal set temperatures for the at least one railway point and
wherein the control unit (103) is designed for controlling the at least one point heating (107) for the at least one railway point (3) on the basis of the updated temporal course (T2) defined by the processing unit (101) by means of the at least one switching device (105).

3. System (1) according to claim 1 or 2 wherein the processing unit (101) forms a group control level (G) and the at least one control unit (103), the at least one switching device (105) and the at least one point heating (107) for at least one railway point (3) form at least one field level (F).

4. System (1) according to claim 3 wherein the group control level (G) and the field level (F) are located separately or next to one another or integrated in one unit.

5. System (1) according to claim 3 or 4 wherein one, two or more field levels (F) are connected to the group control level (G).

6. System (1) according to one of the claims 3 to 5 wherein the at least one field level (F) is connected to the group control level (G) by means of a remote data transmission (DFU).

7. Method for weather data based temperature control of railway points (3), comprising the following steps:
a) calling of weather data for at least one railway point (3) from a weather data provider (W) by means of a processiung unit (101) which is designed for calling weather data from the weather data provider (W) for at least one railway point (3) in definable time intervals,
b) analysing of the called weather data by means of an algorithm with maintaining of a temporal course (T1) of optimal set temperatures for at least one railway point (3),
d) providing of the temporal course (T1) to a control unit (103) which is assigned the at least one railway point (3), and
e) controlling of a point heating (107) intended for the at least one railway point (3) on the basis of the temporal course (T1) by means of the at least one switching device (105),
**characterised by** the fact
that the calling of weather data and the method in step a) are continously carried out, wherein the analysing of the called weather data in step b) is carried out continously in definable time intervals and wherein the providing of the temporal course (T1) in step d) is continously carried out in definable time intervals by which the set temperature of the railway point (3) is updated continously and dependent on the weather and that the controlling of a point heating (107) in step e) is carried out continously in periodic temporal distances until the respective set temperature of the railway point (3) is reached.

8. Method according to claim 7, further comprising the step
c) comparing of the temporal course (T1) to actual weather data on the at least one railway point (3) which are transmitted by a weather recording device (109) with maintaining of an updated temporal course (T2) of optimal set temperatures for the at least one railway point (3),
wherein the updated temporal course (T2) is provided to the control unit (103) in step d), and
wherein the point heating (107) intended for the at least one railway point (3) is controlled in step e) on the basis of the updated temporal course (T2) by means of the at least one switching device (105).

9. Method according to one of the claims 7 or 8 wherein the weather data comprises the parameters air temperature, amount of precipitation, probability of precipitation, dewpoint and/or sunshine duration.

10. Method according to one of the claims 7 to 9 wherein the required amount of energy for one or more future time periods is determined from the weather data and the temporal course (T2) and the result is transmitted to the point heating (107).

## Revendications

1. Système (1) de thermorégulation d'aiguillages ferroviaires (3) assistée par des données météorologiques, comprenant
- une unité de calcul (101) connectée à un fournisseur de données météorologiques (W), qui est conçue pour obtenir, du fournisseur de données météorologiques (W), à intervalles de temps prédéfinissables, des données météorologiques pour au moins un aiguillage ferroviaire (3),
- au moins une unité de commande (103) connectée à l'unité de calcul (101),
- au moins un appareil de commutation (105) connecté à l'au moins une unité de commande (103), et
- au moins un chauffage d'aiguillage (107) connecté à l'appareil de commutation (105) pour au moins un aiguillage ferroviaire (3),
**caractérisé en ce que**
l'unité de calcul (101) est conçue pour obtenir en continu les données météorologiques pour au moins un aiguillage ferroviaire (3), pour analyser en continu et prédéfinir en continu un déroulement dans le temps (T1) de températures de consigne optimales pour l'au moins un aiguillage ferroviaire (3), de sorte qu'une actualisation de la température de consigne des aiguillages ferroviaires (3) soit effectuée en continu et en fonction des conditions météorologiques, et
**en ce que** l'unité de commande (103) est conçue, sur la base du déroulement dans le temps (T1) prédéfini par l'unité de calcul (101), pour régler au moyen de l'au moins un appareil de commutation (105), l'au moins un chauffage d'aiguillage (107) pour l'au moins un aiguillage ferroviaire (3) à intervalles de temps réguliers, jusqu'à ce que la température de consigne correspondante de l'aiguillage ferroviaire (3) soit atteinte.

2. Système (1) selon la revendication 1, comprenant en outre
- au moins un dispositif de détection météorologique (109) connecté à l'unité de calcul (101) pour l'au moins un aiguillage ferroviaire (3), l'unité de calcul (101) étant en outre conçue pour comparer le déroulement dans le temps (T1) avec des données météorologiques effectives au niveau de l'au moins un aiguillage ferroviaire (3), lesquelles sont transmises par le dispositif de détection météorologique (109), et pour prédéfinir un déroulement dans le temps actualisé (T2) de températures de consigne optimales pour l'au moins un aiguillage ferroviaire (3), et
l'unité de commande (103) étant conçue, sur la base du déroulement dans le temps actualisé (T2) prédéfini par l'unité de calcul (101), pour réguler au moyen de l'au moins un appareil de commutation (105), l'au moins un chauffage d'aiguillage (107) pour l'au moins un aiguillage ferroviaire (3).

3. Système (1) selon la revendication 1 ou 2, dans lequel l'unité de calcul (101) forme un plan de direction de groupe (G) et l'au moins une unité de commande (103), l'au moins un appareil de commutation (105) et l'au moins un chauffage d'aiguillage (107) pour l'au moins un aiguillage ferroviaire (3) forment au moins un plan de terrain (F).

4. Système (1) selon la revendication 3, dans lequel le plan de direction de groupe (G) et le plan de terrain (F) sont disposés localement à distance l'un de l'autre ou l'un à côté de l'autre ou sont intégrés dans une unité.

5. Système (1) selon la revendication 3 ou 4, dans lequel au plan de direction de groupe (G) sont associés un, deux, ou plusieurs plans de terrain (F) .

6. Système (1) selon l'une quelconque des revendications 3 à 5, dans lequel l'au moins un plan de terrain (F) est connecté au moyen d'un transfert à distance de données (DFÜ) au plan de direction de groupe (G).

7. Procédé de thermorégulation d'aiguillages ferroviaires (3) assistée par des données météorologiques, comprenant les étapes suivantes :
a) obtention de données météorologiques pour au moins un aiguillage ferroviaire (3) à partir d'un fournisseur de données météorologiques (W) au moyen d'une unité de calcul (101) qui est conçue pour obtenir du fournisseur de données météorologiques (W), à intervalles de temps prédéfinissables, des données météorologiques pour au moins un aiguillage ferroviaire (3),
b) analyse des données météorologiques obtenues au moyen d'une opération algorithmique en obtenant un déroulement dans le temps (T1) de températures de consigne optimales pour l'au moins un aiguillage ferroviaire (3),
d) prédéfinition du déroulement dans le temps (T1) au niveau d'une unité de commande (103) qui est associée à l'au moins un aiguillage ferroviaire (3), et
e) réglage d'un chauffage d'aiguillage (107) prévu sur l'au moins un aiguillage ferroviaire (3) sur la base du déroulement dans le temps (T1) au moyen de l'au moins un appareil de commutation (105),
**caractérisé en ce que** à l'étape a), l'obtention de données météorologiques est effectuée de manière répétée en continu et le procédé est effectué de manière répétée, à l'étape b), l'analyse des données météorologiques obtenues s'effectuant en continu à intervalles de temps prédéfinissables et à l'étape d), la prédéfinition du déroulement dans le temps (T1) des données météorologiques s'effectuant en continu à intervalles de temps prédéfinissables de sorte qu'une actualisation de la température de consigne des aiguillages ferroviaires (3) s'effectue en continu et en fonction des conditions météorologiques, et **en ce qu'**à l'étape e), le réglage d'un chauffage d'aiguillage (107) est effectué à intervalles de temps réguliers jusqu'à ce que la température de consigne correspondante de l'aiguillage ferroviaire (3) soit obtenue.

8. Procédé selon la revendication 7, comprenant en outre l'étape consistant à
c) comparer le déroulement dans le temps (T1) avec des données météorologiques effectives au niveau de l'au moins un aiguillage ferroviaire (3), lesquelles sont transmises par un dispositif de détection météorologique (109), en obtenant un déroulement dans le temps actualisé (T2) de températures de consigne optimales pour l'au moins un aiguillage ferroviaire (3),
à l'étape d), le déroulement dans le temps actualisé (T2) étant prédéfini au niveau de l'unité de commande (103), et
à l'étape e), le chauffage d'aiguillage (107) prévu au niveau de l'au moins un aiguillage ferroviaire (3) étant réglé sur la base du déroulement dans le temps actualisé (T2) au moyen de l'au moins un appareil de commutation (105).

9. Procédé selon l'une quelconque des revendications 7 ou 8, dans lequel les données météorologiques comprennent les paramètres suivants : température de l'air, précipitations, probabilité de précipitations, point de rosée et/ou durée d'ensoleillement.

10. Procédé selon l'une quelconque des revendications 7 à 9, dans lequel, à partir des données météorologiques et du déroulement dans le temps (T2), les besoins énergétiques sont déterminés pour un ou plusieurs intervalles de temps futurs et ceux-ci sont transmis au chauffage d'aiguillage (107).
